(19) Europäisches Patentamt
European Patent Office
Office européen des brevets

(11) EP 3 107 388 B1

(12) **FASCICULE DE BREVET EUROPEEN**

(45) Date de publication et mention de la délivrance du brevet:
**25.04.2018 Bulletin 2018/17**

(21) Numéro de dépôt: **15709251.1**

(22) Date de dépôt: **12.02.2015**

(51) Int Cl.:
***A01N 37/38*** (2006.01) ***A01N 37/46*** (2006.01)
***A01N 43/16*** (2006.01) ***A01P 7/04*** (2006.01)

(86) Numéro de dépôt international:
**PCT/FR2015/050346**

(87) Numéro de publication internationale:
**WO 2015/124846 (27.08.2015 Gazette 2015/34)**

(54) **COMPOSITION PHYTOSANITAIRE**

PHYTOSANITÄRE ZUSAMMENSETZUNG

PHYTOSANITARY COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2014 FR 1451341**

(43) Date de publication de la demande:
**28.12.2016 Bulletin 2016/52**

(73) Titulaire: **Institut National de la Recherche Agronomique - INRA**
**75007 Paris (FR)**

(72) Inventeurs:
- **POESSEL, Jean-Luc**
**F-84250 Le Thor (FR)**
- **SAUGE-COLLET, Marie-Hélène**
**F-84450 Saint Saturnin Les Avignon (FR)**
- **RAHBE, Yvan**
**F-69100 Villeurbanne (FR)**

(74) Mandataire: **Jacobacci Coralis Harle**
**32, rue de l'Arcade**
**75008 Paris (FR)**

(56) Documents cités:
**WO-A2-2009/095624**

- **CLIFFORD W BENINGER ET AL: "A FLAVANONE AND TWO PHENOLIC ACIDS FROM Chrysanthemum morifolium WITH PHYTOTOXIC AND INSECT GROWTH REGULATING ACTIVITY", JOURNAL OF CHEMICAL ECOLOGY, SPRINGER, NL , vol. 30, no. 3 1 mars 2004 (2004-03-01), pages 589-606, XP007905930, ISSN: 0098-0331, DOI: 10.1023/B:JOEC.0000018631.67394.E5 Extrait de l'Internet: URL:http://www.springerlink.com/content/m3 61351564t278gq/fulltext.pdf**
- **LUKASIK I: "Changes in activity of superoxide dismutase and catalase within cereal aphids in response to plant o-dihydroxyphenols", JOURNAL OF APPLIED ENTOMOLOGY, HAMBURG, DE , vol. 131, no. 3 1 janvier 2007 (2007-01-01), pages 209-214, XP007905925, DOI: 10.1111/J.1439-0418.2006.01136.X Extrait de l'Internet: URL:http://www3.interscience.wiley.com/cgi -bin/fulltext/118521826/PDFSTART**
- **DATABASE CAPLUS, [Online] 1 janvier 1995 (1995-01-01), KIMMINS F M ET AL: "Growth inhibition of the cotton bollworm (Helicoverpa armigera) larvae by caffeoylquinic acids from the wild groundnut, Arachis paraguariensis", XP002499216, extrait de CAPLUS Database accession no. 1998-97273**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE DE L'INVENTION

La présente invention se rapporte au domaine phytosanitaire et notamment au domaine de la lutte contre les insectes ravageurs des plantes. Elle concerne en particulier des composés destinés à des applications phytosanitaires ainsi que les compositions les contenant. Elle concerne enfin un procédé de lutte contre les pucerons.

### ETAT DE LA TECHNIQUE

Les insectes ravageurs des plantes, et notamment les insectes phytophages, causent des dommages économiquement importants dans les grandes cultures et les cultures horticoles et réduisent fortement les rendements agricoles et déprécient les récoltes si leur éradication n'est pas assurée. En effet, les insectes ravageurs se nourrissent de diverses parties de plantes: feuilles, fleurs, racines, fruits, graines, sève, etc. et causent des dommages qui sont habituellement très apparents. Certains insectes phytophages ont des pièces buccales de type broyeur, comme les criquets, doryphores ou chenilles, et peuvent gruger les feuilles ou autres parties de plantes. D'autres insectes phytophages, appelés insectes piqueurs-suceurs, ont des pièces buccales de type suceur, notamment les pucerons, les aleurodes, les psylles et les cochenilles. Ces insectes absorbent les sucs des plantes en introduisant leurs pièces buccales à l'intérieur de celles-ci (dans la tige, la feuille ou les racines par exemple).

Parmi ces insectes piqueurs-suceurs, les aphidés, par leur rapidité de développement et leur capacité de dissémination, constituent un véritable fléau en agriculture. Ils s'attaquent à presque toutes les espèces de plantes. Les dégâts peuvent se manifester par des décolorations tachetées jaunâtres qui apparaissent normalement sur le dessous des feuilles qui, par la suite, se dessèchent et meurent. Certaines espèces d'aphidés forment des galles ou provoquent l'enroulement ou la déformation des feuilles. Les aphidés installés sur d'autres parties de la plante, telles que les tiges ou les rameaux, peuvent retarder la croissance, provoquer la chute rapide des feuilles ou la mort des rameaux. Les aphidés sont également vecteurs de nombreuses maladies virales (CAB International (1996). Crop Protection Compendium - Global module, (2nd Edition). Les autres insectes piqueurs-suceurs, tels que les cochenilles (par exemple *Planococcus citri*), les aleurodes (par exemple *Trialeurodes vaporariorum, Bemisia tabaci*) ou encore les psylles (par exemple *Psylla pyri*) causent également des dommages importants dans les grandes cultures et les cultures horticoles.

On mentionnera tout particulièrement le puceron vert du pêcher (*Myzus persicae*). Les dégâts directs causés par ce puceron sur son hôte primaire, le pêcher, sont dus à ses piqûres alimentaires qui provoquent le dessèchement des bourgeons, la chute des fleurs, des déformations du feuillage et des jeunes pousses, perturbent la croissance et peuvent induire des réactions nécrotiques (Massonié et al., (1979) revue de zoologie agricole et pathologie végétale 78, 1-5 ; Monet et Massonié, (1994) Agronomie 2 177-182 ; Monet et Guye, (1998) in Monet R. (Ed) Proc. Fourth Intern. Peach Symposium Acta Hort 171-175). Cet insecte piqueur suceur est particulièrement nuisible pour le pêcher, car il est un vecteur potentiel du *Plum Pox*
*Virus,* agent causal de la maladie de la Sharka, qui provoque des déformations ainsi que des décolorations des fruits les rendant non commercialisables. Aucun moyen de lutte curative pour ce virus n'étant disponible, les arbres infectés doivent être arrachés. *Myzus persicae* a pour hôte secondaire de très nombreuses plantes herbacées dont certaines ont une importance économique majeure : pomme de terre, choux, colza, aubergine, betterave, tomate, poivron etc. Ce puceron est très nuisible pour ces cultures en raison des dégâts directs qu'il cause et de la transmission de nombreux virus qu'il occasionne.

De nombreux insecticides sont connus pour lutter contre les insectes ravageurs, néanmoins des résidus de ces composés chimiques sont retrouvés dans l'environnement ; ils affectent la biodiversité, contaminent les denrées alimentaires et ont un impact négatif sur la santé humaine.

Des insecticides d'origine naturelle et notamment d'origine végétale ont donc été développés présentant une toxicité moindre pour l'homme et l'environnement. On connaît ainsi les compositions à base de pyrèthre ou de géraniol, par exemple.

Récemment des produits phytosanitaires destinés à la lutte contre les pucerons comprenant des dérivés de l'acide quinique ont été proposés (WO2009/095624).

L'acide chicorique est connu pour ses applications cosmétiques ou pharmacologiques, notamment comme composé anti-viral (WO200063152), comme agent dépigmentant (WO2012000960), ou pour le traitement de troubles associés au syndrome métabolique, comme l'hyperinsulinémie, l'hypertriglycéridémie, le prédiabète, le surpoids (WO2008022974).

Des applications pour le traitement du VIH ont également été proposées (Robinson et al., PNAS 1996, 93 :6326-31).

Une étude de Snook et al. (J. Agric. Food Chem., 1994, 42 :1572-74) a mis en évidence la présence d'acide chicorique chez certaines variétés d'arachides présentant des résistances au champignon *cercosporidium personatum,*

au thrips du tabac (*cercosporidium personatum),* ou à la cicadelle de pommes de terre (*empoasca fabae*). Néanmoins, les taux d'acide chicorique retrouvés ne sont pas corrélés au niveau de résistance des arachides, à ces organismes.

Par ailleurs, le document Beninger et al. (Journal Of Chemical Ecology, 2004 30(3) :589-606) divulgue que des acides phénoliques consistant en l'acide chlorogénique et l'acide 3,5-dicaféyolquinique extraits de *C. morifolium* régulent la croissance des larves de certains insectes.

Le document Lukasik (J. Appl. Entomol. 2007, 131(3):209-214) décrit que certains dihydroxyphénols comme l'acide caféique, la quercétine ou l'acide chlorogénique ont des effets pro-oxydants et inhibent l'activité de la catalase chez certains aphidés.

Le document Kimmins et al. (Insect Science and its Application, 1995 16(3/4) :363-368) mentionne que l'acide chlorogénique, l'acide 3-caféoylquinique, et l'acide 1 caféoyl-4-deoxyquinique inhibent le développement larvaire de lepidoptère du genre *Helicoverpa.*

Ainsi, à la connaissance des inventeurs, l'acide chicorique ou l'un de ses dérivés n'a jamais été proposé pour des applications phytosanitaires, notamment pour lutter contre les insectes de la superfamille des pucerons et des *phylloxeroidea.*

Outre leurs effets toxiques, à l'égard de l'environnement et/ou de la santé humaine ou animale, l'utilisation d'insecticides, très largement répandue, conduit progressivement à la sélection d'individus résistants dont l'éradication devient de plus en plus difficile.

Il est donc nécessaire de disposer de nouveaux composés qui soient efficaces contre les insectes ravageurs, notamment contre les aphides, aux doses les plus faibles possibles.

Il est aussi souhaitable de disposer de composés présentant une efficacité améliorée (supérieure à celle de composés de l'art antérieur), aisément formulables et non toxiques.

**RESUME DE L'INVENTION**

La présente invention répond à cette nécessité puisque les inventeurs ont découvert, qu'un composé de formule (I), l'acide chicorique (également nommé acide dicaféoyltartrique) présente un fort pouvoir insecticide, et notamment aphicide, tout en étant dépourvu en l'état actuel des connaissances d'effets néfastes pour l'environnement et la santé humaine. En outre ce composé présente une dose efficace, permettant de repousser ou d'éliminer les insectes ravageurs, très basse.

La présente invention se rapporte donc à l'utilisation d'un composé de formule (I) :

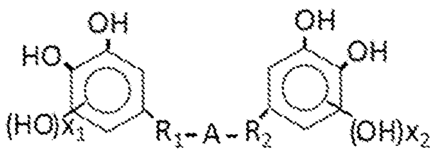

dans laquelle,

- $x_1$ et $x_2$ sont chacun indépendamment = 0 ou 1 ;
- $-R_1-$ représente un groupe choisi parmi

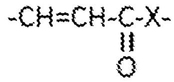,
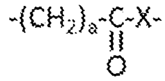

et $-(CH_2)_b-$
- $-R_2-$ représente un groupe choisi parmi

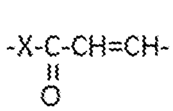,
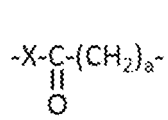,

et $-(CH_2)_b-$
dans lesquels pour $-R_1-$ et $-R_2-$ :

- -X- représente O ou N,
- a = 0, 1, ou 2
- b = 1, 2 ou 3, et de préférence b = 1 ou 2;

- -A- représente un mono-saccharide, un di-saccharide ou un groupe choisi parmi:

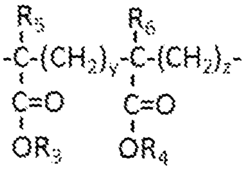
,

$-(CH_2)_{n1}-NH-(CH_2)_{n2}-[NH-(CH_2)_{n3}]_{n4}-$ et

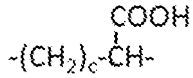
,

dans lesquels

- y et z sont chacun indépendamment égal à 0, 1, 2, 3 ou 4
- $-R_3$ et $-R_4$ représentent chacun indépendamment H ou un alkyl en $C_1$-$C_3$
- $n_1$, $n_2$, $n_3$ sont chacun indépendamment égal à 1, 2, 3, ou 4 et $n_4$ = 0 ou 1
- c = 2, 3 ou 4, de préférence 3 ;
- $R_5$- et $R_6$- représentent chacun indépendamment H, OH ou le groupe

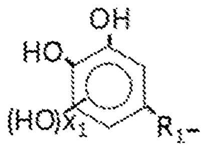

avec $-R_1-$ choisi entre

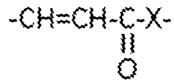
,
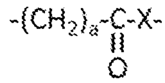

ou $-(CH_2)_b-$avec b = 1, 2 ou 3, et de préférence b = 1 ou 2;

pour lutter contre les organismes nuisibles des plantes, à savoir contre les insectes de la super famille des *Aphidoidea* et des *Phylloxeroidea.*

La présente invention se rapporte également à une composition phytosanitaire comprenant au moins un composé de formule (I), notamment l'acide chicorique, dans une concentration allant de 0.06 à 5 mM et de préférence au moins un excipient adapté aux utilisations phytosanitaires.

Enfin la présente invention vise également un procédé de traitement phytosanitaire et notamment de lutte contre les aphides, comprenant une étape consistant à appliquer au moins un composé de formule (I) ou une composition le contenant sur les pucerons, sur un endroit infesté par les pucerons ou sur un endroit susceptible d'être infesté par les pucerons.

**DESCRIPTION DES FIGURES**

Figure 1. Comparaison des effets phagorépulsifs de l'acide chicorique (acide dicaféoyltartrique) et de l'acide caftarique (acide monocaféoyltartrique) sur les pucerons *Myzus persicae :* indice de phagostimulation (IPG) en fonction de la dose d'acide chicorique (1A) ou d'acide caftarique (1B) à des doses allant de 0 mM à 1mM (0 ; 0,03125 ; 0,0625 ; 0,125 ; 0,25 ; 0,5 et 1mM).

Figure 2. Mortalité journalière cumulée observée au cours du développement larvaire de *Myzus persicae* : Histogramme illustrant le pourcentage de mortalité larvaire des pucerons *Myzus persicae* du premier (J1) au septième jour (J7) (de gauche à droite), pour des doses allant de de 0 à 1 mM (0,03125 ; 0,0625 ; 0,125 ; 0,25 ; 0,5 et 1mM) d'acide chicorique (2A) ou d'acide caftarique (2B).

Figure 3 : Mortalité journalière cumulée observée au cours du développement larvaire d'*Acyrthosiphon pisum.* Histogramme illustrant le pourcentage de mortalité larvaire des pucerons *Acyrthosiphon pisum* du premier (J1) au dixième jour (J10) de leur développement larvaire, pour des doses d'acide chicorique de 0 ; 0,03125 ; 0,0625 ; 0,125 ; 0,25 ; 0,5 et 1mM (de gauche à droite pour chaque jour de développement larvaire).

## DESCRIPTION DETAILLEE

La présente invention se rapporte à l'utilisation, pour lutter contre les organismes nuisiblesdes plantes, d'au moins un composé de formule (I) :

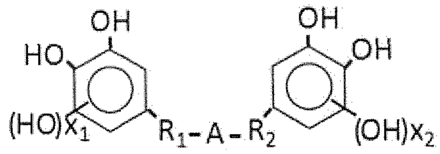

dans laquelle,

- $x_1$ et $x_2$ sont chacun indépendamment = 0 ou 1 ;
- -$R_1$- représente un groupe choisi parmi

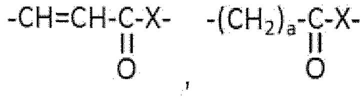

et -$(CH_2)_b$-
- -$R_2$- représente un groupe choisi parmi

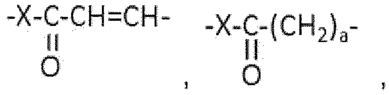

et -$(CH_2)_b$-
dans lesquels pour -$R_1$- et -$R_2$- :

  - -X- représente O ou N,
  - a = 0, 1, ou 2
  - b = 1, 2 ou 3, et de préférence b = 1 ou 2;

- -A- représente un mono-saccharide, un di-saccharide ou un groupe choisi parmi:

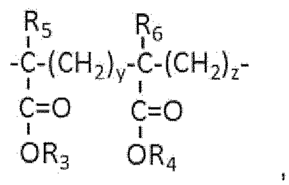

-$(CH_2)_{n1}$-NH-$(CH_2)_{n2}$-[NH-$(CH_2)_{n3}$]$_{n4}$- et

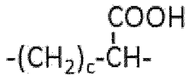
,

dans lesquels

- y et z sont chacun indépendamment égal à 0, 1, 2, 3 ou 4
- c = 2, 3, ou 4, de préférence 3 ;
- $n_1$, $n_2$, $n_3$ sont chacun indépendamment égal à 1, 2, 3, ou 4 et $n_4$ = 0 ou 1
- $R_3$ et $R_4$ représentent chacun indépendamment H ou un alkyl en $C_1$-$C_3$
- $R_5$- et $R_6$- représentent chacun indépendamment H, OH ou le groupe

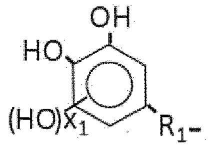

avec -$R_1$- choisi entre

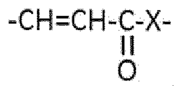
,
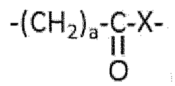

ou, -$(CH_2)_b$-avec b = 1, 2 ou 3, et de préférence b = 1 ou 2;

pour lutter contre les organismes nuisibles des plantes, à savoir contre les insectes de la super famille des *Aphidoidea* et des *Phylloxeroidea.*

Sauf mention spécifiques, les différents modes de réalisation d'un composé de formules (I) selon l'invention décrits ci-dessous peuvent être pris seuls ou en combinaison:

Un monosaccharide ou ose est un monomère de glucide. Il possède de 3 à 9 atomes de carbone, de préférence de 3 à 6 et de façon particulièrement préférée de 4 à 6 atomes de carbone. Selon l'invention il pourra s'agir d'un poly hydoxy aldéhyde (aldose) ou d'un poly hydroxy cétone (cétose). Dans un mode de réalisation particulier de l'invention, le groupe -A- tel que défini précédemment est le glucose.

Dans certains modes de réalisation, -$R_1$- représente un groupe choisi parmi :

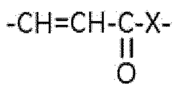
et
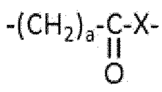
,

dans lesquels-X- représente O ou N, et de préférence O, et a = 0, 1, ou 2 et de préférence 0 ou 1 et notamment a = 0, et et -$R_2$- représente un groupe choisi parmi :

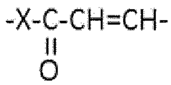
,
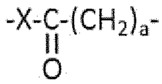

et, -$(CH_2)_b$-,dans lesquels -X- représente O ou N, et de préférence O, et a = 0, 1, ou 2 et de préférence 0 ou 1 et notamment a = 0.

De préférence, dans un composé de formule (I)

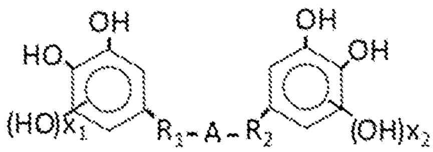

selon l'invention, lorsque le groupe -$R_1$- et/ou -$R_2$ représente(nt) respectivement un groupe choisi parmi les groupes constitués par respectivement par

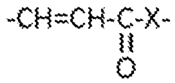

et

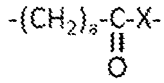

,

pour -$R_1$- et

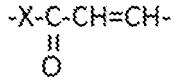

et

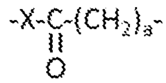

pour -$R_2$-, alors $x_1$ et/ou $x_2$ = 0. De préférence encore, -X- représente O.

De préférence également, dans un composé de formule (I) selon l'invention, $R_5$- et $R_6$-représentent chacun indépendamment l'un de l'autre H ou OH.

Dans certains modes de réalisation également, -A- représente de préférence le groupe

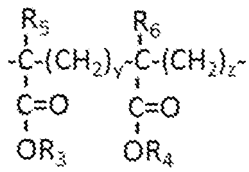

,

dans lequel :

- y et z sont chacun indépendamment égal à 0, 1, 2, 3 ou 4, de préférence y et z sont chacun indépendamment égal à 0 ou 1 et notamment égal à 0
- $R_3$ et $R_4$ représentent chacun indépendamment H ou un alkyl en $C_1$-$C_3$, de préférence un alkyl en C1, de préférence encore $R_3$ et $R_4$ représentent chacun H
- $R_5$ et $R_6$ représentant chacun indépendamment H ou OH, et de préférence H

De préférence, dans ces modes de réalisation, -$R_1$- et -$R_2$ représente(nt) respectivement un groupe choisi parmi les groupes constitués par respectivement par

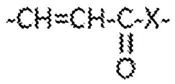

et

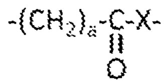,

pour $-R_1-$ et

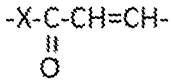 et 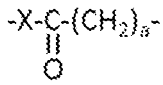

pour $-R_2-$, dans lesquels:

- -X- représente O ou N, et de préférence O
- a = 0, 1, ou 2, notamment 0 ou 1 et de préférence 0

De préférence encore dans ces modes de réalisation, $R_1$ et $R_2$ représentent respectivement chacun le groupe

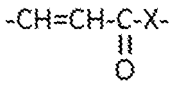

pour $R_1$ et

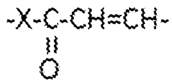

pour $R_2$.

Dans un composé de formule (I) préféré selon l'invention :

- $-R_1-$ et $-R_2-$ représentent chacun respectivement un groupe choisi parmi

  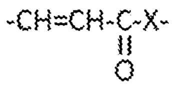 et 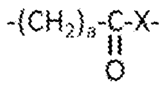

  pour $-R_1-$ et un groupe choisi parmi

  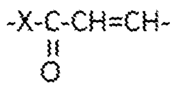

  et

  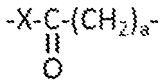

  pour $-R_2-$, dans lesquels -X- représente O et a = 1 ou 2; et
- -A- représente le groupe

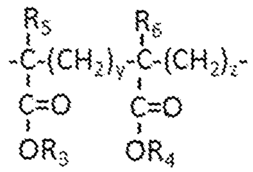

,

dans lequel y et z sont chacun égal à 0 ou 1, et $R_3$, $R_4$, $R_5$ et $R_6$ sont chacun H.

Dans certains modes de réalisation, dans un composé de formule (I) ci-dessus, lorsque -A- représente le groupe $-(CH_2)_{n1}-NH-(CH_2)_{n2}-[NH-(CH_2)_{n3}]_{n4}-$, $n_1$ est de préférence égal à 3, $n_2$ est de préférence égal à 4, $n_4$ est égal à 0 ou 1. Lorsque $n_4$ est égal à 1, $n_3$ est de préférence égal à 3. Dans un tel mode de réalisation, $-R_1-$ et $-R_2-$ représentent de préférence chacun respectivement un groupe choisi parmi:

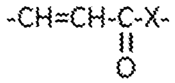 et 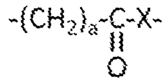

pour $-R_1-$ et un groupe choisi parmi

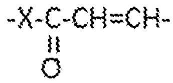

et

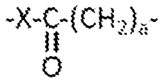

pour $-R_2-$, dans lesquels:

- -X- représente O ou N, et de préférence N
- a = 0, 1, ou 2

Dans un composé de formule (I) préféré selon l'invention :

- $-R_1-$ et $-R_2-$ représentent chacun respectivement un groupe choisi parmi

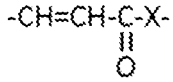 et 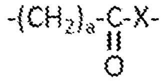

pour $-R_1-$ et parmi

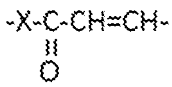 et 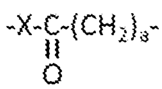

pour $-R_2-$, dans lesquels -X- représente N et a = 1 ou 2; et

- -A- représente le groupe $-(CH_2)_{n1}-NH-(CH_2)_{n2}-[NH-(CH_2)_{n3}]_{n4}-$, dans lequel $n_1$, $n_2$, $n_3$ sont chacun indépendamment égal à 1, 2, 3, ou 4 et $n_4$ = 0 ou 1.

Selon un mode de réalisation préféré de l'invention, les groupes $-R_1-$ et $-R_2-$ d'un composé de formule (I) représentent chacun respectivement un groupe choisi parmi

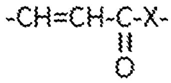 et 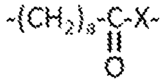

pour -$R_1$- et parmi

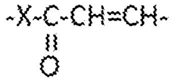 et 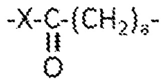

pour -$R_2$-. De préférence, les groupes -$R_1$- et -$R_2$- d'un composé de formule (I) sont identiques.

Des exemples de composés de formule (I) adapté à l'invention sont notamment :

- l'acide dicaféoyltartrique (ou acide chicorique), de formule :

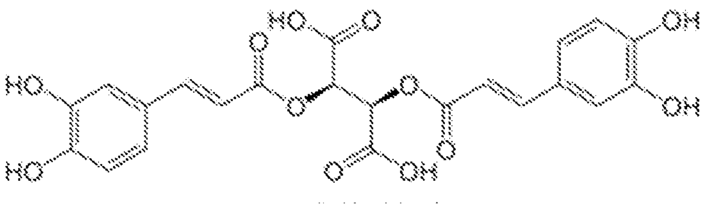

- La dicaféoylspermidine, de formule :

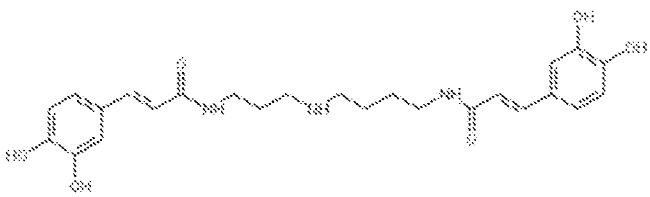

- La N1, N12-Bis(dihydrocaféoyl)spermine, de formule :

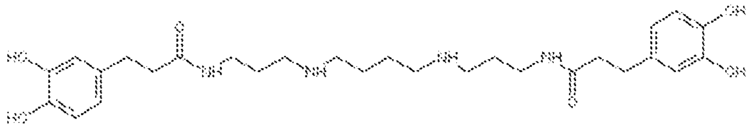

- L'acide fukinolique, de formule :

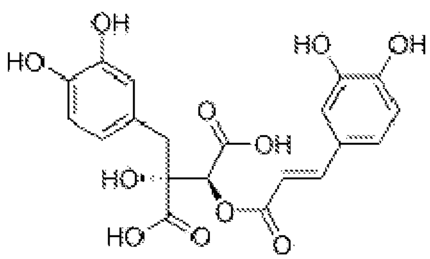

- La N,N-Dicaféoyl-L-Lysine, de formule :

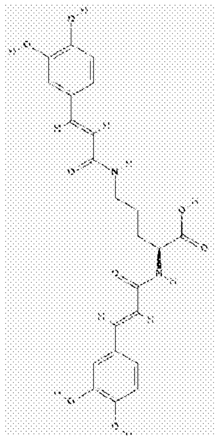

- Le 1,2,3,4,6-Pentagalloyl_glucose, de formule :

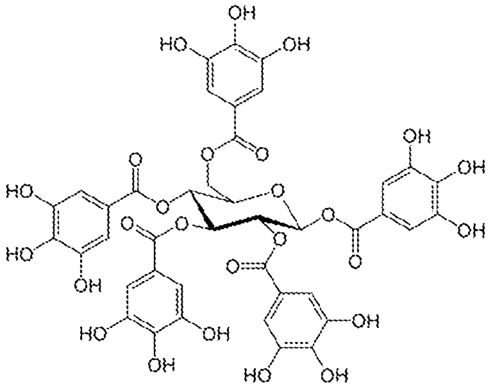

- Le 1,3,6-Trigalloylglucose, de formule :

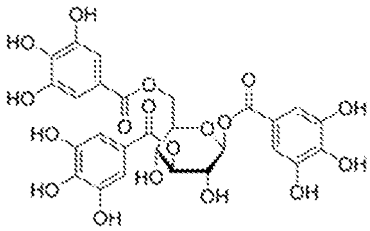

Dans un mode de réalisation préféré de l'invention on utilise l'acide chicorique.

Selon l'invention l'acide chicorique peut être utilisé sous l'une quelconque de ses formes isomères. Il est notamment possible d'utiliser selon l'invention l'acide dicaféoyl-(2S, 3S)-(+)-tartrique, l'acide dicaféoyl-(2R,3R)-(-) tartrique, l'acide dicaféoyl-méso-tartrique, ou leurs mélanges.

L'expression « *leurs mélanges* », également utilisée dans la suite de la demande doit être entendue comme signifiant « *l'un de leurs mélanges en toutes proportions* ».

L'expression « au moins un composé (I) » signifie un composé de formule (I) ou un mélange d'au moins 2 ou 3 ou 4 ou plus composés de formule (I).

Dans certains modes de réalisation de l'invention, les composés de formule (I) tels que définis précédemment peuvent se trouver sous l'un de leurs isomères. Par isomères, il est entendu selon l'invention, les isomères de structure et de disposition dans l'espace. De préférence, on vise selon l'invention les formes optiquement actives (énantiomères, diastéréoisomères et leurs mélanges).

Les composés de formule (I) peuvent être sous forme d'un sel. Les formes salifiées des composés de formule (I) selon l'invention sont utilisables dans le domaine phytosanitaire.

Les composés de formule (I) de l'invention peuvent également se trouver sous forme solvatée.

Les sels acceptables pour les applications phytosanitaires des composés décrits dans la présente invention

comprennent des sels conventionnels desdits composés tels que les sels de métaux alcalins ou alcalino-terreux. Les solvates des composés de l'invention comprennent des solvates conventionnels dans les applications phytosanitaires, tels que ceux formés lors de la dernière étape de préparations des composés du fait de la présence de solvants.

Les composés de formule (I) utilisables selon l'invention, peuvent être d'origine naturelle ou synthétique.

Dans un mode de réalisation particulier de l'invention, on utilise au moins un composé de formule (I) d'origine végétale.

Selon l'invention, le composé de formule (I), peut être sous forme plus ou moins purifiée, obtenue par synthèse chimique, ou purifié à partir de produits naturels et notamment de produits végétaux. Il peut ainsi se trouver sous la forme d'un ou plusieurs extraits d'un ou plusieurs produits naturels en contenant.

Dans un mode de réalisation particulier on utilise au moins en tant que composé de formule (I), l'acide chicorique ou l'un de ses isomères d'origine naturelle.

L'acide chicorique (ou l'un de ses isomères) peut être présent sous forme plus ou moins purifiée ou sous forme d'un ou plusieurs extraits végétaux en contenant.

En particulier, l'acide chicorique peut être isolé ou purifié à partir de plantes telles que décrites ci-dessous. Des procédés d'obtention d'acide chicorique naturel sont décrits par exemple dans Scarpati et al., « Chicoric Acid (Dicaffeyltartaric acid): Its isolation from Chicory and synthesis » Tetrahedron, 1958, Vol. 4, pp. 43-48 et dans la demande FR2904935.

L'acide chicorique ou ses dérivés tels que définis dans la présente demande peuvent également être obtenus par synthèse chimique, comme décrit par exemple dans la demande WO03/029183, ou par Lamidey et al. (2002) ou Zhao et al. (1998) pour l'obtention d'acide chicorique synthétique.

L'acide chicorique est notamment présent chez de nombreuses espèces végétales appartenant plus particulièrement aux familles suivantes: *Asteraceae, Lamiaceae, Fabaceae, Equisetaceae, Cymodoceaceae* ou *Posidoniaceae* ou autres, telles que par exemple la chicorée (*Cichorium intybus*), la laitue (*Lactuca sativa*), l'échinacée (*Echinacea purpurea*), l'arachide (*Arachis hypogaea*), le basilic (*Ocimum basilicum*), la prèle (*Equisetum arvense*), le pissenlit (*Taraxacum officinalis*), les plantes de la famille des *violaceae* (notamment *Viola brachyceras*) les plantes sous-marines, *Syringodium filiforme, Cymodocea nodosa* et la posidonie (*Posidonia oceanica*). C'est souvent le composé phénolique majoritaire de toutes les espèces et familles de plantes précitées qui peuvent donc servir à l'extraction et la purification de cette substance.

Avantageusement, l'acide chicorique est obtenu à partir de plantes appartenant à la famille des *Asteraceae,* des *Lamiaceae,* des *Fabaceae,* des *Equisetaceae,* des *Cymodoceaceae* ou des *Posidoniaceae,* avantageusement les chicorées sauvages (par exemple *Cichorium intybus*) ou cultivées (par exemple le chicon ou endive), mais également l'échinacée (comme *Echinacea pupurea*).

Dans la famille des *Asteraceae* (ou Astéracées ou Composées), l'acide chicorique peut être obtenu à partir de plantes du genre: *Lactuca,* les laitues ; *Cichorium,* les chicorées dont le chicon (ou endive) ; *Cynara,* l'artichaut ; *Taraxacum,* le pissenlit ;; *Echinacea,* l'échinacée et *Lapsana.*

Dans la famille des *Lamiaceae* (ou Lamiacées ou Labiées), l'acide chicorique peut être obtenu à partir de plantes des genres: *Ocimum* (*Ocimum basilicum,* le basilic) et *Melissa* (*Melissa officinalis,* la mélisse officinale).

Dans la famille des Fabaceae (ou fabacées ou légumineuses), l'acide chicorique peutêtre obtenu à partir de plantes des *Faboidées,* notamment *Arachis hypogaea.*

Dans la famille des *Cymodoceaceae,* l'acide chicorique peut être obtenu à partir de plante des genres *Syringodium,* plus particulièrement de l'espèce *Syringodium filiforme,* et *Cymodocea,* notamment de l'espèce *Cymodocea nodosa.*

Dans la famille des *Posidoniaceae,* l'acide chicorique peut être obtenu à partir de plantes du genre *Posidonia, comme* la posidonie (*Posidonia oceanica*) Dans la famille des *Equisetaceae,* l'acide chicorique peut être obtenu à partir de: *Equisetum arvense,* la prêle.

Par utilisation phytosanitaire, on entend selon l'invention, une utilisation pour prévenir l'installation d'insectes ravageurs ou soigner les plantes infestées. En particulier l'invention vise les utilisations pour lutter contre les nuisibles des plantes. Par lutter, on entend prévenir les infestations des plantes par lesdits nuisibles, repousser ou éliminer lesdits nuisibles. Un composé selon l'invention pourra ainsi avoir une action répulsive ou toxique (paralysante ou létale) selon la dose utilisée et les nuisibles visés. Ainsi, un composé de formule (I) selon l'invention, et notamment l'acide chicorique sous l'une quelconque de ses formes isomères, peut être utilisé selon l'invention pour exercer au moins l'un des effets suivants : prévenir, repousser ou éliminer les insectes nuisibles et en particulier les insectes de la superfamille des *Aphidoidea* et des *Phylloxeroidea.*

Par "plantes", on entend notamment toutes les espèces végétales cultivées par l'homme, en particulier celles destinées à son alimentation ou celle de l'animal (céréales, cultures fourragères, légumières, fruitières, vigne, etc.), et/ou à la fourniture de bois de toutes destinations (chauffage, construction d'habitations, de meubles, etc.) et/ou à l'ornementation.

Par nuisibles des plantes, on entend classiquement toute espèce, souche ou biotype de végétal, d'animal ou

d'agent pathogène nuisible pour les plantes ou les produits végétaux. Cette définition couvre notamment les insectes et les acariens, les bactéries, les champignons, les virus ainsi que les plantes parasites.

L'invention vise en particulier les insectes ravageurs des plantes, notamment les insectes phytophages (en particulier les insectes suceurs-piqueurs) du sous ordre des *Sternorrhyncha,* comme les pucerons et les insectes assimilés aux pucerons comme le phylloxéra, les cochenilles, les aleurodes et les psylles.

L'invention vise notamment les insectes de la superfamille des pucerons, ou aphides, (*Aphidoidea*), qui comprend les familles des *Oviparosiphidae,* des *Pemphigidae,* des *Anoeciidae,* des *Hormaphididae,* des *Tajmyraphididae,* des *Mindaridae,* des *Drepanosiphidae,* des *Thelaxidae,* des *Phloemyzidae,* des *Greenideidae,* des *Lachnidae* et des *Aphididae,* et de la super famille des *Phylloxeroidea* qui comprend les familles des *Adelgidae,* des *Mesozoicaphididae,* des *Elektraphididae* et des *Phylloxeridae* à laquelle appartient l'espèce *Daktulosphaira vitifoliae* (précédemment *Phylloxera vastatrix*) appelé communément le Phylloxéra de la Vigne.

Parmi les superfamilles des *Aphidoidea* et des *Phylloxeroidea,* l'invention vise notamment les familles des *Aphididae* ainsi que les familles des *Adelgidae* et des *Phylloxeridae,* très similaires aux *aphididae.* Plus particulièrement, l'invention vise la famille des *Aphididae* et la famille des *Phylloxeridae,* et notamment dans cette dernière famille, le *Daktulosphaira vitifoliae.*

Dans les familles des *Aphididae* (communément appelés pucerons) et des *Phylloxeridae,* l'invention vise particulièrement les espèces choisies dans le groupe comprenant *Myzus persicae* (puceron vert du pêcher), *Myzus varians* (puceron cigarier du pêcher), *Myzus cerasi* (puceron noir du cerisier), *Brachycaudus persicae* (puceron noir du pêcher), *Aphis pomi* (puceron vert non migrant du pommier), *Brachycaudus helichrysi* (puceron vert du prunier), *Hyalopterus pruni* (puceron farineux du prunier), *Dysaphis plantaginea* (puceron cendré du pommier), *Dysaphis pyri,* (puceron cendré (ou mauve) du poirier), *Aphis gossypii* (puceron du cotonnier et du melon), *Acyrthosiphon pisum* (puceron du pois), *Macrosiphum euphorbiae* (puceron rosé et vert de la pomme de terre), *Aphis spiraecola* (*A. citricola*) (puceron vert des Citrus), *Aphis fabae* (puceron noir de la fève), *Rhopalosiphum maidis* (puceron vert du maïs), *Rhopalosiphum padi* (puceron du merisier à grappe), *Sitobion avenae* (puceron des épis de céréales), *Diuraphis noxia* (puceron russe du blé), *Brevicoryne brassicae* (puceron cendré du chou), *Eriosoma lanigerum* (puceron lanigère du pommier), *Nasonovia ribisnigri* (puceron de la laitue), *Amphorophora idaei* (puceron du framboisier), *Toxoptera aurantii* (puceron noir des citrus et puceron du caféier), *Elatobium abietinum* (puceron vert de l'épicéa) et *Pemphigus bursarius* (puceron de la laitue), pour la famille des *Aphididae* ; et *Daktulosphaira vitifoliae* appelé communément le Phylloxéra de la Vigne pour la famille des *Phylloxeridae.*

Ainsi l'invention vise particulièrement les espèces choisies dans le groupe comprenant *Myzus persicae* (puceron vert du pêcher), *Myzus varians* (puceron cigarier du pêcher), *Myzus cerasi* (puceron noir du cerisier), *Brachycaudus persicae* (puceron noir du pêcher), *Aphis pomi* (puceron vert non migrant du pommier), *Brachycaudus helichrysi* (puceron vert du prunier), *Hyalopterus pruni* (puceron farineux du prunier), *Dysaphis plantaginea* (puceron cendré du pommier), *Dysaphis pyri*, (puceron cendré (ou mauve) du poirier), *Aphis gossypii* (puceron du cotonnier et du melon), *Acyrthosiphon pisum* (puceron du pois), *Macrosiphum euphorbiae* (puceron rosé et vert de la pomme de terre), *Aphis spiraecola* (*A. citricola*) (puceron vert des Citrus), *Aphis fabae* (puceron noir de la fève), *Rhopalosiphum maidis* (puceron vert du maïs), *Rhopalosiphum padi* (puceron du merisier à grappe), *Sitobion avenae* (puceron des épis de céréales), *Diuraphis noxia* (puceron russe du blé), *Brevicoryne brassicae* (puceron cendré du chou), *Eriosoma lanigerum* (puceron lanigère du pommier), *Nasonovia ribisnigri* (puceron de la laitue), *Amphorophora idaei* (puceron du framboisier), *Toxoptera aurantii* (puceron noir des citrus et puceron du caféier), *Elatobium abietinum* (puceron vert de l'épicéa), *Pemphigus bursarius* (puceron de la laitue), et *Daktulosphaira vitifoliae.*

Dans un mode de réalisation particulier l'invention vise les pucerons choisis parmi les espèces *Myzus persicae* (puceron vert du pêcher), *Acyrthosiphon pisum* (puceron du pois), *Aphis gossypii* (puceron du cotonnier et du melon), *Macrosiphum euphorbiae* (puceron rosé et vert de la pomme de terre), *Sitobion avenae* (puceron des épis de céréales).

Dans un mode de réalisation de l'invention, un composé selon l'invention peut être utilisé en association avec au moins un autre composé ou substance choisi(e) parmi les substances ou composés nutritifs, acaricides, fongicides, insecticides.

Dans un mode de réalisation particulier, on utilisera en association avec au moins un composé de formule (I) selon l'invention, au moins un composé d'origine naturelle, d'origine végétale ou animale, utilisable dans le domaine de l'agriculture biologique. On citera notamment les composés ou substances choisi(e)s parmi: l'azadirachtine ; les gélatines ; la lécithine ; la laminarine, les huiles végétales, notamment les huiles essentielles comme les huiles essentielles de menthe et/ou d'orange douce, de pin ou de carvi ; les pyréthrines ; le quassia, l'extrait de clou de girofle et l'extrait de fenugrec pour les substances d'origine animale ou végétale ; le spinosad, pour les substances produites par les mircroorganismes ; ainsi que le phosphate ferrique, le cuivre sous forme d'hydroxyde de cuivre, d'oxychlorure de cuivre, de sulfate de cuivre (tribasique) d'oxyde cuivreux, d'octanoate de cuivre ; l'éthylène ; le sel de potassium des acides gras ; l'alun de potassium (sulfate d'aluminium, kalinite) ; le bicarbonate de potassium, le phosphonate de potassium, l'acibenzolar-S-Méthyl (ASM ou BTH) et son analogue fonctionnel, l'acide salicylique ; le polysulfure de calcium ; l'huile de paraffine ; les huiles minérales ; le permanganate de potassium ; le sable quartzeux ; le soufre, les phéromones,

ou encore d'autres composés éliciteurs homologués pour l'agriculture biologique.

Dans certains modes de réalisation des substances actives à activité insecticide, et notamment anti-pucerons (*i.e.* présentant une activité répulsive ou toxique à l'encontre des pucerons) sont préférées.

Un composé de formule (I) selon l'invention, et notamment l'acide chicorique, peut être utilisé dans une concentration, allant de 0.06 à 5 mM, notamment de 0,06 à 0.125 mM, de 0.06 à 0.120 mM, ou de 0.125 à 5 mM, de 0.125 à 2 mM, de 0.125 à 1 mM, ou encore de 0.125 à 0.5 mM.

Dans certains modes de réalisation les composés de formule (I) décrits précédemment peuvent être formulés dans une quantité efficace, sous forme d'une composition contenant en outre au moins un excipient, en particulier sous forme d'une composition phytosanitaire. Une telle composition peut également comprendre au moins un principe actif autre qu'un composé de formule (I) selon l'invention.

On entend par quantité efficace, une quantité d'un composé de formule (I), ou d'un mélange de composés de formule (I), permettant d'obtenir le but recherché, c'est-à-dire prévenir les infestations des plantes par les organismes nuisibles, repousser ou éliminer lesdits nuisibles.

Ainsi il a été montré dans l'invention, qu'une composition comprenant un composé de formule (I) dans une quantité efficace permettait de repousser les insectes ravageurs et en particulier les pucerons. Il a également été montré que l'augmentation de la concentration, en composé de formule (I) de l'invention, permettait d'atteindre un effet toxique à l'égard des pucerons et de leurs larves.

Dans certains modes de réalisation de l'invention, une composition phytosanitaire comprend une concentration d'un composé de formule (I) tel que décrit précédemment, ou d'un mélange de composés de formule (I), et de préférence en acide chicorique, supérieure ou égale à 0.06 mM. Dans d'autres modes de réalisation, ladite composition comprendra une concentration d'acide chicorique, ou de l'un de ses dérivés selon l'invention, ou de l'un leurs mélanges, supérieure à 0.125 mM. Il a ainsi été démontré qu'une concentration comprise entre 0.06 mM (cette borne inférieure étant comprise dans l'intervalle) et 0.125 mM permettait d'obtenir un effet répulsif sur les nuisibles des plantes et particulièrement sur les *Aphididae* (aphidés). A partir de 0.125 mM un effet toxique, permettant l'élimination des nuisibles est obtenu.

Avantageusement une composition de l'invention comprendra des concentrations d'un composé de formule (I) ou d'un mélange de composés de formule (I), allant de 0.06 à 0.125 mM, en particulier de 0.06 à 0.120 mM, ou de 0.125 à 5 mM, de 0.125 à 2 mM, de 0.125 à 1 mM, ou encore de 0.125 à 0.5 mM.

Une composition comprenant une concentration d'un composé de formule (I) ou d'un mélange de composé de formule (I) allant de 0.06 mM à 0.125 (borne non comprise) mM, en particulier de 0.06 mM à 0.12 mM sera préférentiellement utilisée selon l'invention pour prévenir ou limiter l'infestation des plantes par les insectes ravageurs.

Une composition comprenant une concentration d'un composé de formule (I) ou d'un mélange de composé de formule (I) supérieure ou égale à 0.125 mM sera préférentiellement utilisée selon l'invention pour éliminer les insectes ravageurs. On utilisera en particulier des concentrations allant de 0.125 à 5 mM, de 0.125 à 1 mM, de 0.125 à 0.5 mM, de 0.125 à 0.25 mM. Dans certains modes de réalisation on utilisera néanmoins une concentration inférieure à 1 mM.

Dans un mode de réalisation particulier, une composition phytosanitaire selon l'invention comprend au moins l'acide chicorique, ou l'un de ses isomères, choisi parmi l'acide dicaféoyl-(2S, 3S)-(+)- tartrique, l'acide dicaféoyl-(2R,3R)-(-) tartrique et l'acide dicaféoyl-méso-tartrique ou l'un de leurs mélanges. L'acide chicorique peut également être sous forme d'un mélange avec un autre composé de formule (I) tel que défini précédemment.

Une composition selon l'invention pourra également comprendre au moins une autre substance active à activité phytosanitaire telle que décrite précédemment. En particulier la composition pourra comprendre au moins un composé ou une substance choisie parmi le groupe constitué par : l'azadirachtine ; les gélatines ; la lécithine ; la laminarine, les huiles végétales, comme les huiles essentielles de menthe et/ou d'orange douce, de pin ou de carvi ; les pyréthrines ; le quassia, l'extrait de clou de girofle et l'extrait de fenugrec pour les substances d'origine animale ou végétale ; le spinosad, pour les substances produites par les mircroorganismes ; ainsi que le phosphate ferrique, le cuivre sous forme d'hydroxyde de cuivre, d'oxychlorure de cuivre, de sulfate de cuivre (tribasique) d'oxyde cuivreux, d'octanoate de cuivre ; l'éthylène ; le sel de potassium des acides gras ; l'alun de potassium (sulfate d'aluminium, kalinite) ; le bicarbonate de potassium, le phosphonate de potassium, l'aAcibenzolar-S-Méthyl (ASM ou BTH) et son analogue fonctionnel l'acide salicylique, le polysulfure de calcium ; l'huile de paraffine ; les huiles minérales ; le permanganate de potassium ; le sable quartzeux ; le soufre, les phéromones, ou encore d'autres composés éliciteurs homologués pour l'agriculture biologique.

Dans un mode de réalisation particulier, une composition phytosanitaire, par exemple une composition pour lutter contre les insectes de la superfamille des pucerons, et plus particulièrement pour lutter contre les pucerons et le phylloxera de la vigne, peut comprendre l'acide chicorique en association avec au moins un autre composé ou une autre substance choisie parmi : les pyréthrines ; le quassia, le spinosad, le cuivre sous forme d'hydroxyde de cuivre, d'oxychlorure de cuivre, de sulfate de cuivre (tribasique) d'oxyde cuivreux, le soufre, le bicarbonate de potassium, le phosphonate de potassium, l'acibenzolar-S-méthyl, l'extrait de clou de girofle, l'extrait de fenugrec, les huiles essentielles, comme l'huile essentielle d'orange douce, de menthe, de pin ou de carvi, et les phéromones.

En particulier, la composition phytosanitaire de l'invention peut comprendre l'acide chicorique en association

avec au moins un autre composé d'origine naturelle ayant une activité phytosanitaire, ledit au moins un autre composé étant choisi parmi les pyréthrines, les huiles essentielles, le soufre ou le cuivre sous forme d'hydroxyde de cuivre, d'oxychlorure de cuivre, de sulfate de cuivre (tribasique) ou d'oxyde cuivreux.

Dans certains modes de réalisation, une composition phytosanitaire de l'invention comprend un seul principe actif consistant en un composé de formule (I) ou un mélange de composés de formule (I). Plus particulièrement, une composition phytosanitaire comprend l'acide chicorique sous forme de l'un quelconque de ses isomères ou de leurs mélanges en tant que seul principe actif.

La composition pourra être préparée selon différentes formulations adaptées aux utilisations phytosanitaires, notamment choisies parmi le groupe constitué par les formulations de type : liquide destiné à être utilisé sans dilution (AL), poudre destinée à être utilisée sans dilution (AP), granulé encapsulé (CG), liquide ou gel de contact (CL), poudre de contact (CP), poudre de poudrage (DP), concentré émulsionnable (EC), granule émulsionnable (EG), émulsion de type huileux (EO), émulsion de type aqueux (EW), granulé fin (FG), macrogranulés (GG), gel émulsionnable (GL), poudre à pulvériser (GP), granulés (GR), graisse (GS), gel soluble dans l'eau (GW), microémulsion (ME), microgranulés (MG), suspension concentrée diluable dans l'huile (OF), suspension miscible à l'huile (OL), poudre à disperser dans l'huile (OP), concentré sous forme de gel ou pâte (PC), bâtonnets (à usage agropharmaceutique) (PR), suspension concentrée (SC), suspoémulsion (SE), granulés solubles dans l'eau (DG), concentré soluble (SL), huile filmogène (SO), poudre soluble dans l'eau (SP), tablettes soluble dans l'eau (ST), tablettes (TB), granulés à disperser dans l'eau (WG), poudre mouillable (WP), tablettes à disperser dans l'eau (WT) - le code à deux lettres majuscules indiqué correspondant aux codes internationaux pour les formulations phytosanitaires (Manuel of Development and use of FAO specifications for plant protection Products, FAO, 5ème édition, 1999, basé sur le « Catalogue of pesticides formulations types and international coding system », CIFAP, Technical monograph N°2, 32ème édition, 1989).

Suivant la formulation adoptée, une composition phytosanitaire de l'invention comprendra un ou plusieurs excipient(s) visant à présenter le ou les ingrédient(s) actif(s) (composé de l'invention et éventuellement au moins un autre composé ou une autre substance à activité phytosanitaire) sous une forme stable et permettant son application, en lui ajoutant des excipients destinés à augmenter et faciliter son action.

La formulation d'une composition selon l'invention permet notamment d'assurer une efficacité optimale du ou des ingrédient(s) actif(s). Ainsi, afin de limiter leur dispersion dans l'environnement et le dosage nécessaire, une composition pourra comprendre des agents mouillants. Ces agents augmentent l'étalement du pesticide sur la surface traitée et diminuent l'angle de contact des gouttelettes avec le support végétal (ou animal), avec deux conséquences : une meilleure adhésion et une plus grande surface de contact et d'action. La formulation peut également augmenter l'efficacité biologique de la molécule active avec des additifs retardant sa dégradation et prolongeant ainsi sa durée d'action. Inversement, d'autres additifs peuvent accélérer son élimination par les plantes à protéger ou dans le sol.

L'ajout de certains excipients peut également viser à limiter les risques d'intoxication pour le manipulateur : afin d'obtenir une toxicité minimale par contact et inhalation, en prévenant les ingestions accidentelles on pourra ajouter dans une composition de l'invention des adjuvants choisis parmi les colorants, les répulsifs, les antidotes ou les vomitifs.

Afin de rentabiliser le ou les ingrédient(s) actif(s), le ou les solvant(s) employé(s) le cas échéant, seront généralement peu coûteux et facilement disponibles. Des excipients complémentaires pourront être utilisés pour augmenter la conservation au stockage et/ou éviter la corrosion du matériel d'épandage.

Une composition selon l'invention pourra donc comprendre de façon non limitative et à titre d'exemple au moins un excipient choisi parmi : les solvants, les tensio-actifs, les adhésifs, les agents émulsifiant, les stabilisants, les photoprotecteurs, les anti-transpirants, les colorants, les substances répulsives, les agents de modification de la viscosité, les agents antimousse, notamment les antimousse siliconés, les agents anti-rebond, les agents anti-lessivage, les séquestrants, les inhibiteurs de corrosion, les charges inertes, notamment les charges minérales, les agents anti-gel, les émétiques (vomitifs) et parfois les antidotes.

Dans un mode de réalisation particulier, une composition selon l'invention comprend au moins un excipient choisi parmi le groupe constitué par les inhibiteurs de corrosion, les agents anti-gel, les émétiques, etc.

La présente invention se rapporte également à une méthode de traitement phytosanitaire et notamment à un procédé de lutte contre les nuisibles des plantes, en particulier un procédé de lutte contre les ravageurs des plantes et plus particulièrement un procédé de lutte contre les aphides, comme mentionné précédemment.

Un tel procédé selon l'invention comprend au moins une étape consistant à appliquer au moins un composé de formule (I), de préférence au moins l'acide chicorique, ou une composition le contenant et telle que précédemment décrite, sur les pucerons, ou sur les plantes ou sur les parties des plantes infestées par les nuisibles ou susceptibles de l'être.

La méthode de traitement selon l'invention met le plus souvent en oeuvre des doses de matière active allant de 0,1 à 10 000 g/ha, de manière préférée de 10 à 2 000 g/ha, par exemple de 50 à 1000 g/ha. Ces doses pourront être adaptées selon la composition de l'invention et la formulation qui est utilisée ainsi que selon les conditions climatiques, les éventuels phénomènes de résistance ou d'autres facteurs naturels, la nature du traitement ou le degré d'infestation, ainsi que selon les plantes ou les lieux à traiter.

## EXEMPLES

Mode opératoire :

**a)** Analyse de l'effet répulsif : la méthode utilisée est celle développée par Yvan Rahbé (Rahbé & Febvay (1993) Entomologia Experimentalis et Applicata 67: 149-160 ; Chen (1996) Thèse de l'Institut National des Sciences Appliquées, Lyon, France: 158 p) dans le cadre de recherches sur les déterminants chimiques de la résistance des plantes à diverses espèces de pucerons (*Aphis gossypii, Acyrthosiphon pisum*), et adaptée au puceron vert *Myzus persicae.*

L'objectif est d'évaluer le caractère attractif ou répulsif d'une molécule candidate, à différentes concentrations, soit par rapport à un milieu de base témoin (dose « 0 »), soit par rapport à une autre substance. Le milieu de base utilisé, dit Ap3, milieu artificiel mis au point pour l'élevage du puceron du pois, *Acyrthosiphon pisum,* et reproduisant la composition en acides aminés de ce dernier, (Febvay et al. (1999) Fate of dietary sucrose and neosynthesis of amino acids in the pea aphid, Acyrthosiphon pisum, reared on différent diets. Journal of Experimental Biology, 1999, 202(19): 2639-2652 ; Febvay et al. (1988) Canadian Journal of Zoology 66: 2149-2453) permet aussi le développement de *Myzus persicae.* Ce milieu de base est supplémenté ou non par l'acide chicorique (acide dicaféoyltartrique) ou l'acide caftarique (acide monocaféoyltartrique). Le comportement de choix du puceron, mis en présence des deux milieux, est étudié dans un système clos où l'insecte n'a pas d'autre alternative pour se nourrir que de choisir l'un des deux milieux.

Le milieu (35 μl) est coulé entre deux membranes de Parafilm® étirées sur un cône Eppendorf®. Sur un portoir comportant 6 cages expérimentales, un milieu témoin est disposé en face d'un milieu testé sur chaque cage. Les répétitions d'une même modalité (milieu témoin ou milieu testé) sont disposées en alternance le long du portoir, pour éviter tout biais systématique lors du dépôt des pucerons. Six larves de puceron (second ou troisième stade) sont déposées en fin de journée dans chacune des cages d'un portoir. Les portoirs sont ensuite introduits dans une boîte noire placée dans une enceinte climatique à 19 °C pendant 15 heures. Ce passage à l'obscurité permet de stabiliser plus rapidement la fixation des larves. Le lendemain matin, le nombre de pucerons fixés sur chaque milieu est alors noté. Les tests sont effectués en routine sur 24 répétitions de choix (4 portoirs comportant chacun 6 cages). Un indice de phagostimulation, représentant le degré d'appétence pour le puceron du milieu testé, est calculé de la façon suivante :

$$\text{Indice de phagostimulation} = (\text{Nb test} - \text{Nb témoin}) / \text{Nb total},$$

où :

Nb test = Nombre de pucerons fixés sur le milieu testé,
Nb témoin = Nombre de pucerons fixés sur le milieu témoin,
Nb total = Nombre total de pucerons fixés.

Par construction, la valeur de l'indice est comprise entre -1 et 1. Un indice négatif signifie que le milieu testé est répulsif par rapport au milieu témoin, et un indice positif signifie que le milieu testé est attractif. L'hypothèse que l'effet du milieu testé est identique à celui du milieu témoin est examinée par le test des rangs de Wilcoxon.

L'acide chicorique et l'acide caftarique sont d'origine commerciale (Sigma-Aldrich, France). La teneur et la stabilité des molécules dissoutes sont contrôlées par CLHP après dissolution des molécules dans le milieu Ap3, au début et en fin d'expérimentation.

**b)** Mesure de la toxicité de l'acide chicorique ou de l'acide caftarique sur le développement larvaire du puceron vert du pêcher (*Myzus persicae*) et du puceron du pois *(Acyrthosiphon pisum)*

L'objectif est de quantifier l'effet toxique de l'acide chicorique ou de l'acide caftarique sur le puceron pendant la durée de son développement larvaire, soit 8 à 10 jours pour *Myzus persicae* et *Acyrthosiphon pisum* à 19 °C. La molécule est ajoutée à différentes concentrations au milieu nutritif témoin Ap3. La dose « 0 » correspond au milieu Ap3 seul.

Le milieu (75 μl) est coulé entre deux membranes de Parafilm® stérilisées aux UV et étirées sur un support cylindrique en PVC (h = 1,5 cm, d = 2 cm), en conditions stériles.

Le Jour JO, 20 larves néonates sont déposées à l'intérieur du cylindre, lequel est ensuite retourné et appliqué sur un carré de Parafilm©. Les boîtes sont placées sous lumière tamisée (16h jour/8h nuit) et dans une enceinte à 19

°C. Le pourcentage de fixation est noté après 1 heure comme indicateur de phagostimulation à court terme et pour vérifier qu'aucune anomalie ne s'est produite au moment du dépôt des pucerons. La mortalité larvaire est relevée quotidiennement en fin de journée. Au jour J+3, les larves sont prélevées et dédoublées dans deux nouvelles boîtes. Le jour de leur mue imaginale, les pucerons ayant atteint le stade adulte aptère sont déposés successivement sur une balance de précision (d = 0,01 mg) et les poids cumulés sont notés pour chaque concentration de chacune des deux molécules testées. Les poids individuels sont calculés ultérieurement. Les effets d'une même molécule à toutes les concentrations et les effets du milieu témoin sont évalués simultanément pendant le même test. Les tests sont effectués en routine sur 3 répétitions.

Résultats :

**a)** Analyse de l'effet répulsif (Figures 1A et 1B).

Les résultats obtenus mettent en évidence un effet répulsif significatif de l'acide chicorique et une absence d'effet de l'acide caftarique ne comportant qu'un groupement caféoyl.
L'acide chicorique, ou acide dicaféoyltartrique montre un effet répulsif fortement significatif dès la dose de 62.5 μM. En revanche, pour aucune des doses testées, l'acide caftarique ne montre un effet répulsif.

**b)** Effet toxique de l'acide chicorique ou de l'acide caftarique sur la mortalité larvaire (Figures. 2 et 3).

On observe un effet très marqué de l'acide chicorique sur la mortalité larvaire du puceron *Myzus persicae* (fig.2), qui augmente progressivement au cours du développement de l'insecte. La mortalité augmente également avec la concentration, pour atteindre pratiquement 80 % à partir de 0.125 mM et 100% à partir 0.25 mM. En revanche, la mortalité de myzus persicae n'excède jamais 10% en présence d'acide caftarique (y compris aux concentrations les plus élevées).
On observe également un effet toxique très marqué de l'acide chicorique sur le puceron du pois (*Acyrthosiphon pisum*) (fig.3) avec un effet très significatif (p<0,001) à partir d'une dose de 0,5 mM permettant d'atteindre une mortalité supérieure à 80 % et allant jusqu'à 100 %.

## Revendications

1. Utilisation d'un composé de formule (I)

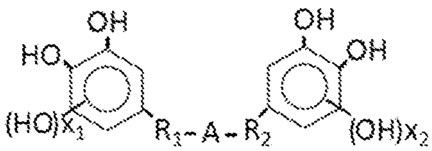

dans laquelle,

- $x_1$ et $x_2$ sont chacun indépendamment = 0 ou 1 ;
- $-R_1-$ représente un groupe choisi parmi

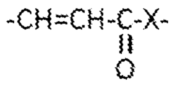 , 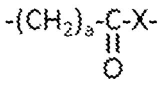 et

$-(CH_2)_b-$
- $-R_2-$ représente un groupe choisi parmi

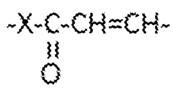 , 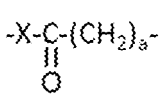 ,

et $-(CH_2)_b$-da
ns lesquels pour $-R_1-$ et $-R_2-$ :

- -X- représente O ou N,
- a = 0, 1, ou 2
- b = 1, 2 ou 3, et de préférence b = 1 ou 2;

- -A- représente un mono-saccharide, un di-saccharide ou un groupe choisi parmi:

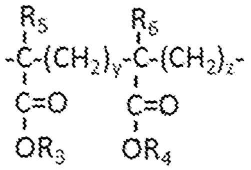
,

$-(CH_2)_{n1}-NH-(CH_2)_{n2}-[NH-(CH_2)_{n3}]_{n4}$-et

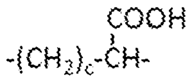
,

dans lesquels

- y et z sont chacun indépendamment égal à 0, 1, 2, 3 ou 4
- $R_3$ et $R_4$ représentent chacun indépendamment H ou un alkyl en $C_1$-$C_3$
- $R_5$ et $R_6$ représentent chacun indépendamment H, OH ou le groupe

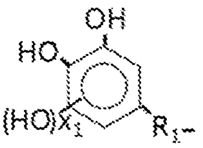
,

avec $-R_1-$ choisi entre

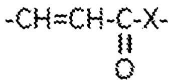
,
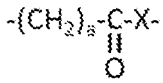

ou $-(CH_2)_b$-et $-R_2-$ choisi entre

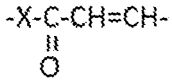
,
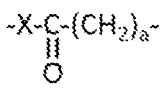
,

ou $-(CH_2)_b$-
- $n_1$, $n_2$, $n_3$ sont chacun indépendamment égal à 1, 2, 3, ou 4 et $n_4$ = 0 ou 1
- c = 2, 3 ou 4, de préférence 3 ;

pour lutter contre les insectes de la super famille des *Aphidoidea* et des *Phylloxeroidea* .

**2.** Utilisation d'un composé (I) selon la revendication 1, **caractérisé en ce que** dans ledit composé de formule (I),

- $-R_1-$ représente un groupe choisi parmi :

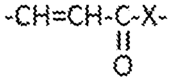 et 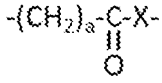,

dans lesquels -X- représente O et a = 1 ou 2; et

- -$R_2$- représente un groupe choisi parmi :

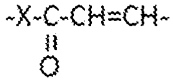 et 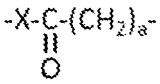,

dans lesquels -X-représente O et a = 1 ou 2;

- -A- représente le groupe

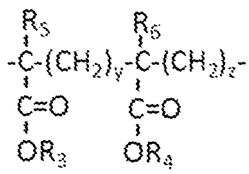,

dans lequel y et z sont chacun égal à 0 ou 1, et $R_3$, $R_4$, $R_5$ et $R_6$ sont chacun H.

**3.** Utilisation d'un composé selon la revendication 1, **caractérisé en ce que** dans ledit composé de formule (I),

- -$R_1$- représente un groupe choisi parmi

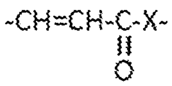 et 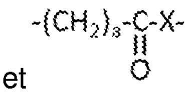,

dans lesquels-X-représente N et a = 1 ou 2; et

- -$R_2$- représente un groupe choisi parmi

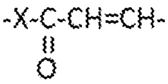 et 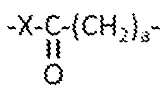,

dans lesquels -X- représente N et a = 1 ou 2; et

- A représente le groupe $-(CH_2)_{n1}-NH-(CH_2)_{n2}-[NH-(CH_2)_{n3}]_{n4}-$, dans lequel $n_1$, $n_2$, $n_3$ sont chacun indépendamment égal à 1, 2, 3, ou 4 et $n_4$ = 0 ou 1.

**4.** Utilisation d'un composé de formule (I) selon la revendication 2, **caractérisé en ce que** ledit composé de formule (I) est l'acide chicorique.

**5.** Utilisation selon l'une des revendications précédentes, **caractérisée en ce que** les insectes appartenant à la super famille des *Aphidoidea* et des *Phylloxeroidea* sont choisis parmi les familles des *Aphididae* et des *Phylloxeridae.*

**6.** Utilisation selon la revendication 5, **caractérisée en ce que** les insectes sont choisis dans le groupe comprenant : *Myzus persicae* (puceron vert du pêcher), *Myzus varians* (puceron cigarier du pêcher), *Myzus cerasi* (puceron noir du cerisier), *Brachycaudus persicae* (puceron noir du pêcher), *Aphis pomi* (puceron vert non migrant du pommier), *Brachycaudus helichrysi* (puceron vert du prunier), *Hyaloptems pruni* (puceron farineux du prunier), *Dysaphis plantaginea* (puceron cendré du pommier), *Dysaphis pyri,* (puceron cendré (ou mauve) du poirier), *Aphis gossypii* (puceron du cotonnier et du melon), *Acyrthosiphon pisum* (puceron du pois), *Macrosiphum euphorbiae* (puceron rosé

et vert de la pomme de terre), *Aphis spiraecola* (*A. citricola*) (puceron vert des Citrus), *Aphis fabae* (puceron noir de la fève), *Rhopalosiphum maidis* (puceron vert du maïs), *Rhopalosiphum padi* (puceron du merisier à grappe), *Sitobion avenae* (puceron des épis de céréales), *Diuraphis noxia* (puceron russe du blé), *Brevicoryne brassicae* (puceron cendré du chou), *Eriosoma lanigerum* (puceron lanigère du pommier), *Nasonovia ribisnigri* (puceron de la laitue), *Amphorophora idaei* (puceron du framboisier), *Toxoptera aurantii* (puceron noir des citrus et puceron du caféier), *Elatobium abietinum* (puceron vert de l'épicéa), *Pemphigus bursarius* (puceron de la laitue) et *Daktulosphaira vitifoliae* (phylloxera de la vigne).

**7.** Utilisation selon la revendication 6, **caractérisée en ce que** le puceron est choisi parmi le groupe constitué par *Myzus persicae* (puceron vert du pêcher), *Acyrthosiphon pisum* (puceron du pois), *Aphis gossypii* (puceron du cotonnier et du melon), *Macrosiphum euphorbiae* (puceron rosé et vert de la pomme de terre) et *Sitobion avenae* (puceron des épis de céréales).

**8.** Utilisation selon l'une des revendications précédentes **caractérisée en ce que** le composé de formule (I) est l'acide chicorique et est formulé dans une composition phytosanitaire à une concentration supérieure ou égale à 0.06 mM.

**9.** Utilisation selon la revendication précédente **caractérisée en ce que** l'acide chicorique est à une concentration supérieure à 0.125 mM.

**10.** Utilisation selon l'une des revendications précédentes, **caractérisée en ce que** le composé de formule (I) est associé à au moins une seconde substance à activité phytosanitaire et/ou une substance nutritive.

**11.** Composition phytosanitaire comprenant l'acide chicorique dans une concentration allant de 0.06 à 5 mM, au moins une autre substance active à activité phytosanitaire, et au moins un excipient adapté à une utilisation phytosanitaire.

**12.** Procédé de traitement phytosanitaire, comprenant une étape consistant à appliquer un composé de formule (I) ou une composition le contenant, sur les pucerons, ou sur un endroit infesté par les pucerons ou sur un endroit susceptible d'être infesté par les pucerons.

## Patentansprüche

**1.** Verwendung einer Verbindung der Formel (I),

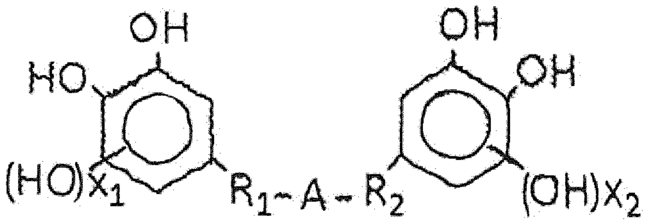

in der

- $x_1$ und $x_2$ jeweils unabhängig = 0 oder 1;
- $-R_1-$ eine Gruppe ausgewählt aus

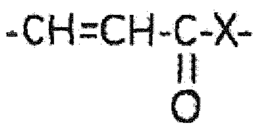
,
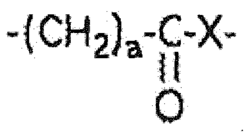

und $-(CH_2)_b-$ bedeutet,
- $-R_2-$ eine Gruppe ausgewählt aus

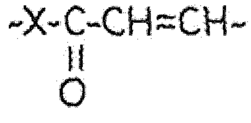 , 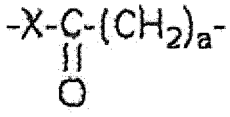

und $-(CH_2)_b-$ bedeutet, w
orin für $-R_1-$ und $=R_2-$ :

- -X- O oder N bedeutet,
- a = 0, 1 oder 2
- b = 1, 2 oder 3, und vorzugsweise b = 1 oder 2;

- -A- ein Monosaccharid, ein Disaccharid oder eine Gruppe ausgewählt aus:

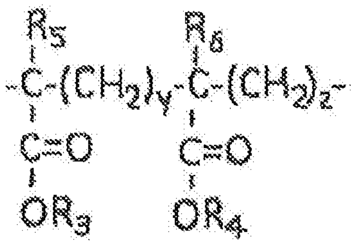

,

$-(CH_2)_{n1}-NH-(CH_2)_{n2}-[NH-(CH_2)_{n3}]_{n4}-$, und

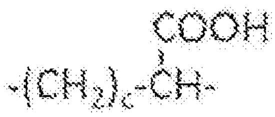

bedeutet, worin

- y und z jeweils unabhängig gleich 0, 1, 2, 3 oder 4 sind,
- $R_3$ und $R_4$ jeweils unabhängig H oder ein $C_1$-$C_3$-Alkyl bedeuten,
- $R_5$ und $R_6$ jeweils unabhängig H, OH oder die Gruppe

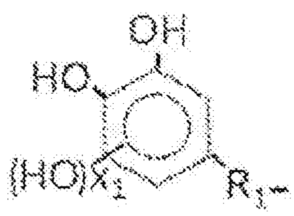

bedeutet, wobei $-R_1-$ aus

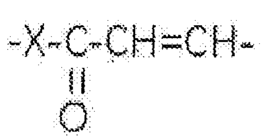 , 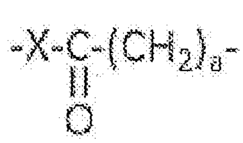

oder ausgewählt ist und $-R_2-$ aus $-(CH_2)_b-$

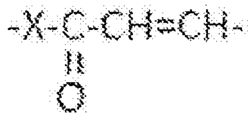
,
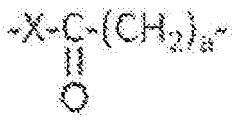

oder ausgewählt ist,

- $n_1$, $n_2$, $n_3$ jeweils unabhängig gleich 1, 2, 3 oder 4 sind und $n_4$ = 0 oder 1,
- c = 2, 3 oder 4, vorzugsweise 3;

zum Bekämpfen von Insekten der Überfamilie der *Aphidoidea* und der *Phylloxeroidea*.

**2.** Verwendung einer Verbindung (I) nach Anspruch 1, **dadurch gekennzeichnet, dass** in der Verbindung der Formel (I)

- -$R_1$- eine Gruppe ausgewählt aus:

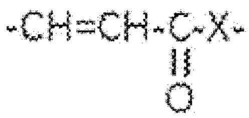
und
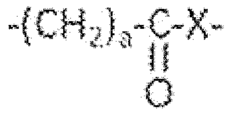

bedeutet, worin -X- O bedeutet und a = 1 oder 2; und

- -$R_2$- eine Gruppe ausgewählt aus:

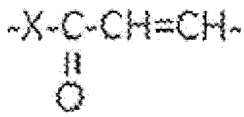

und

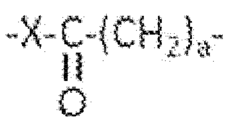

bedeutet, worin -X- O bedeutet und a = 1 oder 2;

- -A- die Gruppe

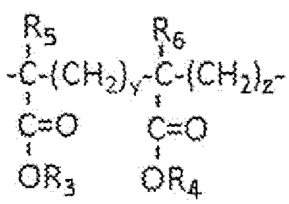

bedeutet, worin y und z jeweils gleich 0 oder 1 sind und $R_3$, $R_4$, $R_5$ und $R_6$ jeweils H bedeuten.

**3.** Verwendung einer Verbindung nach Anspruch 1, **dadurch gekennzeichnet, dass** in der Verbindung der Formel (I)

- -$R_1$- eine Gruppe ausgewählt aus

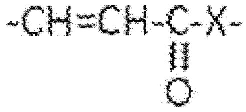

und

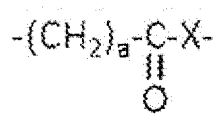

bedeutet, worin -X- N bedeutet und a = 1 oder 2; und

- $-R_2-$ eine Gruppe ausgewählt aus

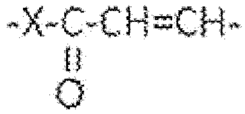

und

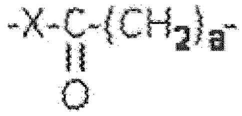

bedeutet, worin -X- N bedeutet und a = 1 oder 2; und

- A die Gruppe $-(CH_2)_{n1}-NH-(CH_2)_{n2}-[NH-(CH_2)_{n3}]_{n4}-$bedeutet, worin $n_1$, $n_2$, $n_3$ jeweils unabhängig gleich 1, 2, 3 oder 4 sind und $n_4$ = 0 oder 1.

**4.** Verwendung einer Verbindung der Formel (I) nach Anspruch 2, **dadurch gekennzeichnet, dass** es sich bei der Verbindung der Formel (I) um Chicoree-Säure handelt.

**5.** Verwendung nach einem der vorhergehenden Ansprüche, **dadurch gekennzeichnet, dass** die zu der Überfamilie der *Aphidoidea* und der *Phylloxeroidea* gehörenden Insekten aus den Familien der *Aphididae* und der *Phylloxeridae* ausgewählt sind.

**6.** Verwendung nach Anspruch 5, **dadurch gekennzeichnet, dass** die Insekten aus der Gruppe umfassend die folgenden ausgewählt sind: *Myzus persicae* (Grüne Pfirsichblattlaus), *Myzus varians* (Waldrebenblattlaus), *Myzus cerasi* (Schwarze Kirschenblattlaus), *Brachycaudus persicae* (Schwarze Pfirsichblattlaus), *Aphis pomi* (Grüne Apfelblattlaus), *Brachycaudus helichrysi* (Kleine Pflaumenblattlaus), *Hyaloptems pruni* (Mehlige Pflaumenblattlaus), *Dysaphis plantaginea* (Mehlige Apfelblattlaus), *Dysaphis pyri* (Mehlige Birnenblattlaus), *Aphis gossypii* (Baumwollblattlaus, Grüne Gurkenblattlaus), *Acyrthosiphon pisum* (Erbsenblattlaus), *Macrosiphum euphorbiae* (Grüngestreifte Kartoffellaus), *Aphis spiraecola* (*A. citricola*) (Grüne Zitronenblattlaus), *Aphis fabae* (Schwarze Bohnenlaus), *Rhopalosiphum maidis* (Maisblattlaus), *Rhopalosiphum padi* (Traubenkirschenblattlaus), *Sitobion avenae* (Große Getreideblattlaus), *Diuraphis noxia* (Russische Weizenlaus), *Brevicoryne brassicae* (Mehlige Kohlblattlaus), *Eriosoma lanigerum* (Apfelblutlaus), *Nasonovia ribisnigri* (Salatblattlaus), *Amphorophora idaei* (Große Himbeerblattlaus), *Toxoptera aurantii* (Kaffeeblattlaus, Schwarze Zitruslaus), *Elatobium abietinum* (Sitkafichtenröhrenlaus), *Pemphigus bursarius* (Salatwurzellaus) und *Daktulosphaira vitifoliae* (Reblaus).

**7.** Verwendung nach Anspruch 6, **dadurch gekennzeichnet, dass** die Blattlaus aus der Gruppe bestehend aus den folgenden ausgewählt ist: *Myzus persicae* (Grüne Pfirsichblattlaus), *Acyrthosiphon pisum* (Erbsenblattlaus), *Aphis gossypii* (Baumwollblattlaus, Grüne Gurkenblattlaus), *Macrosiphum euphorbiae* (Grüngestreifte Kartoffelblattlaus) und *Sitobion avenae* (Große Getreideblattlaus).

**8.** Verwendung nach einem der vorhergehenden Ansprüche, **dadurch gekennzeichnet, dass** es sich bei der Verbindung der Formel (I) um Chicoree-Säure handelt und dass sie in einer Pflanzenschutzzusammensetzung mit einer Konzentration von 0,06 mM oder darüber formuliert ist.

**9.** Verwendung nach dem vorhergehenden Anspruch, **dadurch gekennzeichnet, dass** die Chicoree-Säure in einer Konzentration von über 0,125 mM vorliegt.

**10.** Verwendung nach einem der vorhergehenden Ansprüche, **dadurch gekennzeichnet, dass** die Verbindung der Formel (I) mit mindestens einer zweiten Substanz mit Pflanzenschutzwirkung und/oder mit einer Nährsubstanz kombiniert ist.

**11.** Pflanzenschutzzusammensetzung, umfassend die Chicoree-Säure in einer Konzentration von 0,06 bis 5 mM, mindestens eine weitere Substanz mit Pflanzenschutzaktivität und mindestens einen Exzipienten, der an eine Pflanzenschutzverwendung angepasst ist.

**12.** Pflanzenschutzbehandlungsverfahren, umfassend einen Schritt, der darin besteht, dass man eine Verbindung der Formel (I) oder eine sie umfassende Zusammensetzung auf Blattläuse oder auf einen Ort, der von Blattläusen befallen ist oder auf einen Ort, der von Blattläusen befallen werden kann, ausbringt.

## Claims

**1.** Use of a compound having formula (I)

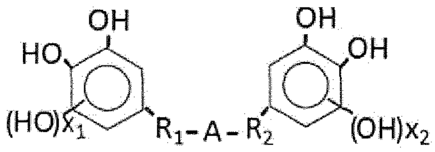

wherein,

- $x_1$ and $x_2$ are each independently = 0 or 1;
- $-R_1-$ represents a group chosen from

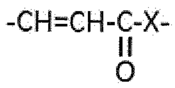
,
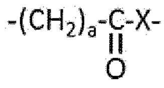

and $-(CH_2)_b-$
- $-R_2-$ represents a group chosen from

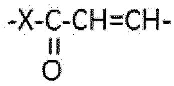
,
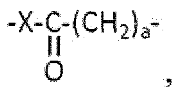
,

and $-(CH_2)_b-$
wherein for $-R_1-$ and $-R_2-$:

  - -X- represents O or N,
  - a = 0, 1, or 2
  - b = 1, 2 or 3, and preferably b = 1 or 2;

- -A- represents a mono-saccharide, a di-saccharide or a group chosen from:

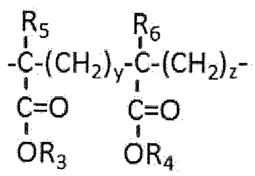
,

$-(CH_2)_{n1}-NH-(CH_2)_{n2}-[NH-(CH_2)_{n3}]_{n4}-$ and

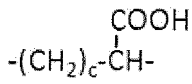

,

wherein

- y and z are each independently equal to 0, 1, 2, 3 or 4
- $R_3$ and $R_4$ each represent independently H or a $C_1$-$C_3$ alkyl
- $R_5$ and $R_6$ each represent independently H, OH or the group

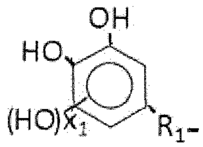

where -$R_1$- chosen between

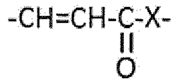

,

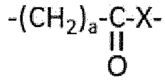

or -$(CH_2)_b$-and -$R_2$- chosen between

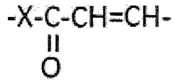

,

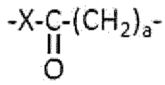

or -$(CH_2)_b$-
- $n_1$, $n_2$, $n_3$ are each independently equal to 1, 2, 3, or 4 and $n_4$ = 0 or 1
- c = 2, 3 or 4, preferably 3;

for controlling insects of the *Aphidoidea* and *Phylloxeroidea* superfamily.

**2.** Use of a compound (I) according to claim 1, **characterized in that** in said compound having formula (I),

- -$R_1$- represents a group chosen from:

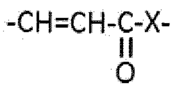

and

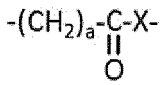

,

wherein -X- represents O and a = 1 or 2, and
- -$R_2$- represents a group chosen from:

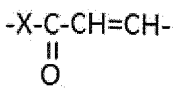

and

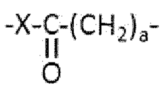

,

wherein -X- represents O and a = 1 or 2;
- -A- represents the group

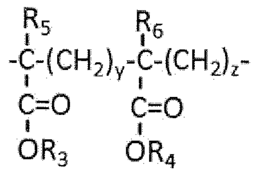
,

wherein y and z are each equal to 0 or 1, and $R_3$, $R_4$, $R_5$ and $R_6$ are each H.

3. Use of a compound according to claim 1, **characterized in that** in said compound having formula (I),

- -$R_1$- represents a group chosen from

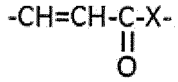

and

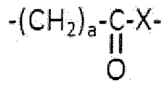
,

wherein -X- represents N and a = 1 or 2; and
- -$R_2$- represents a group chosen from

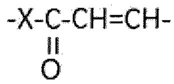
and
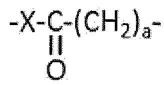
,

wherein -X- represents N and a = 1 or 2; and
- A represents the group $-(CH_2)_{n1}-NH-(CH_2)_{n2}-[NH-(CH_2)_{n3}]_{n4}-$, wherein $n_1$, $n_2$, $n_3$ are each independently equal to 1, 2, 3, or 4 and $n_4$ = 0 or 1.

4. Use of a compound having formula (I) according to claim 2, **characterized in that** said compound having formula (I) is chicoric acid.

5. Use according to any one of the preceding claims, **characterized in that** the insects belonging to the *Aphidoidea* and *Phylloxeroidea* superfamily are chosen from the *Aphididae* and *Phylloxeridae* families.

6. Use according to claim 5, **characterized in that** the insects are chosen in the group comprising: *Myzus persicae* (green peach aphid), *Myzus varians* (peach-clematis aphid), *Myzus cerasi* (black cherry aphid), *Brachycaudus persicae* (black peach aphid), *Aphis pomi* (green apple aphid), *Brachycaudus helichrysi* (leaf-curling plum aphid), *Hyalopterus pruni* (mealy plum aphid), *Dysaphis plantaginea* (rosy apple aphid), *Dysaphis pyri,* (pear bedstraw aphid), *Aphis gossypii* (cotton and melon aphid), *Acyrthosiphon pisum* (pea aphid), *Macrosiphvm euphorbiae* (pink and green potato aphid), *Aphis spiraecola* (*A. citricola*) (green citrus aphid), *Aphis fabae* (black bean aphid), *Rhopalosiphum maidis* (corn aphid), *Rhopalosiphum padi* (bird cherry-oat aphid), *Sitobion avenae* (English grain aphid), *Diuraphis noxia* (Russian wheat aphid), *Brevicoryne brassicae* (cabbage aphid), *Eriosoma lanigerum* (woolly apple aphid), *Nasonovia ribisnigri* (lettuce aphid), *Amphorophora idaei* (large raspberry aphid), *Toxoptera aurantii* (black citrus aphid and coffee aphid), *Elatobium abietinum* (green spruce aphid) and *Pemphigus bursarius* (lettuce aphid), and *Daktulosphaira vitifoliae* (grapevine phylloxera).

7. Use according to claim 6, **characterized in that** the aphid is chosen from the group consisting of *Myzus persicae*

(green peach aphid), *Acyrthosiphon pisum* (pea aphid), *Aphis gossypii* (cotton and melon aphid), *Macrosiphum euphorbiae* (pink and green potato aphid) and *Sitobion avenae* (English grain aphid).

**8.** Use according to any one of the preceding claims, **characterized in that** the compound having formula (I) is chicoric acid and is formulated in a phytosanitary composition at a concentration greater than or equal to 0.06 mM.

**9.** Use according to the preceding claim, **characterized in that** the chicoric acid is at a concentration greater than 0.125 mM.

**10.** Use according to any one of the preceding claims, **characterized in that** the compound having formula (I) is associated with at least one second substance having a phytosanitary activity and/or a nutrient substance.

**11.** Phytosanitary composition comprising chicoric acid in a concentration ranging from 0.06 to 5 mM, at least one further active substance having a phytosanitary activity, and at least one excipient suitable for phytosanitary use.

**12.** Phytosanitary treatment method, comprising a step consisting of applying at least one compound having formula (I) or a composition containing same, on aphids, or on a site infested with aphids or on a site liable to be infested by aphids.

1A

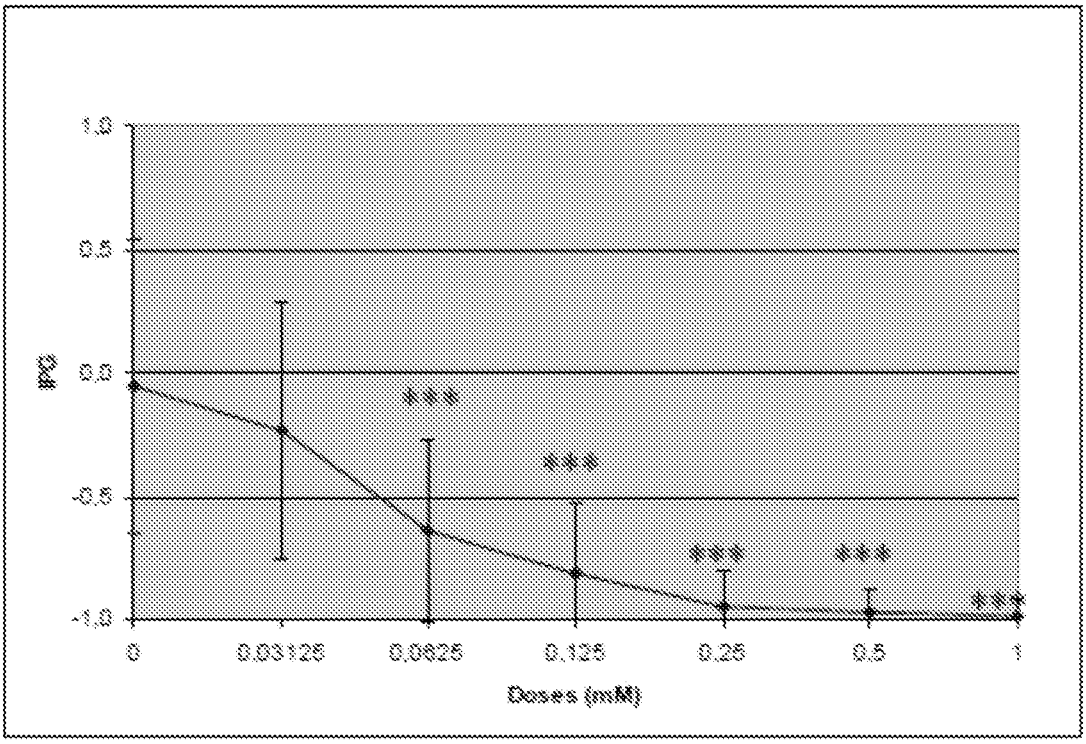
1,0
0,5
0,0
-0,5
-1,0
IPG
***
***
***
***
***
0
0,03125
0,0625
0,125
0,25
0,5
1
Doses (mM)

1B

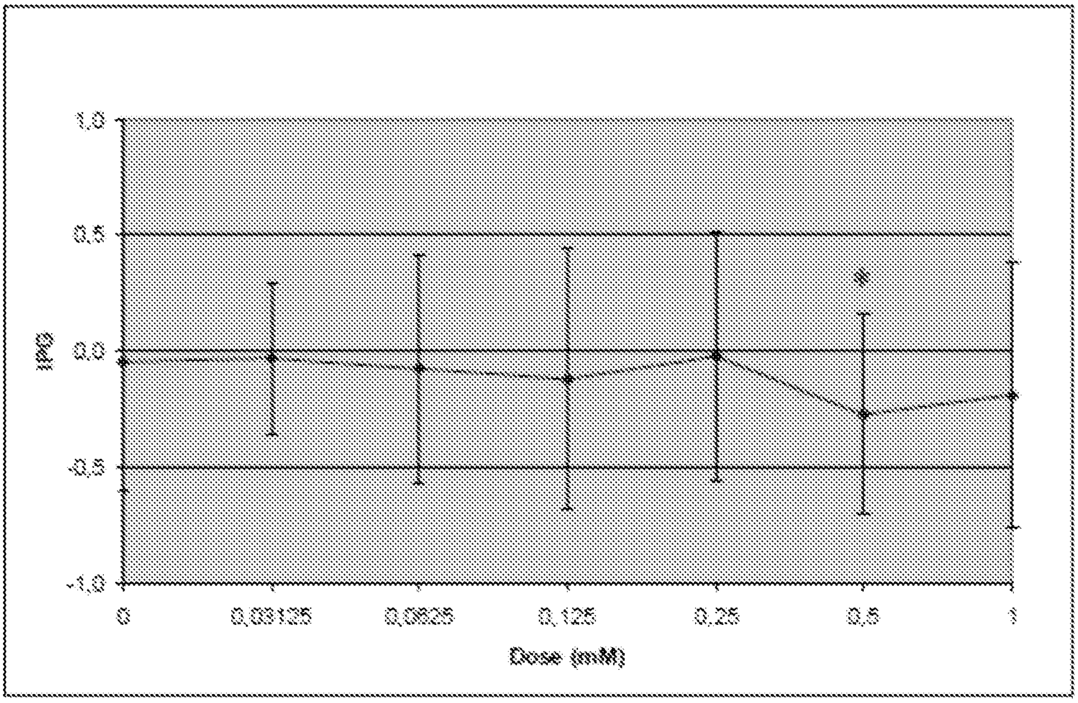
1,0
0,5
0,0
-0,5
-1,0
IPG
*
0
0,03125
0,0625
0,125
0,25
0,5
1
Dose (mM)

2A

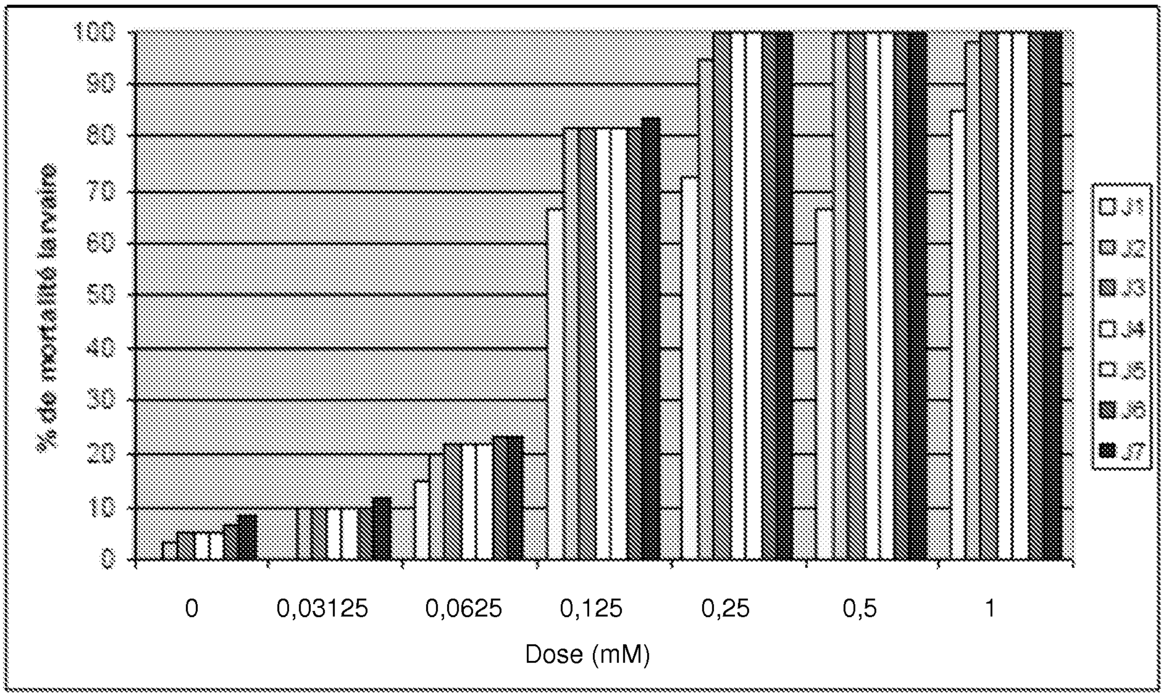
% de mortalité larvaire
100
90
80
70
60
50
40
30
20
10
0
0
0,03125
0,0625
0,125
0,25
0,5
1
Dose (mM)
J1
J2
J3
J4
J5
J6
J7

2B

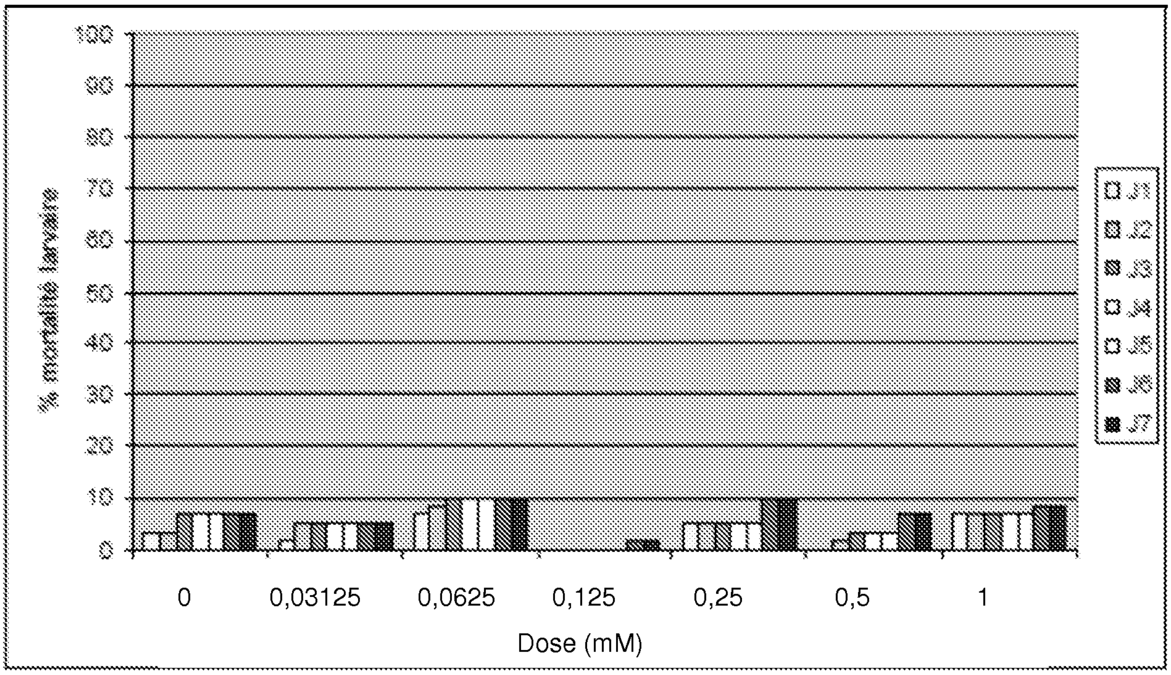
% mortalité larvaire
100
90
80
70
60
50
40
30
20
10
0
0
0,03125
0,0625
0,125
0,25
0,5
1
Dose (mM)
J1
J2
J3
J4
J5
J6
J7

3

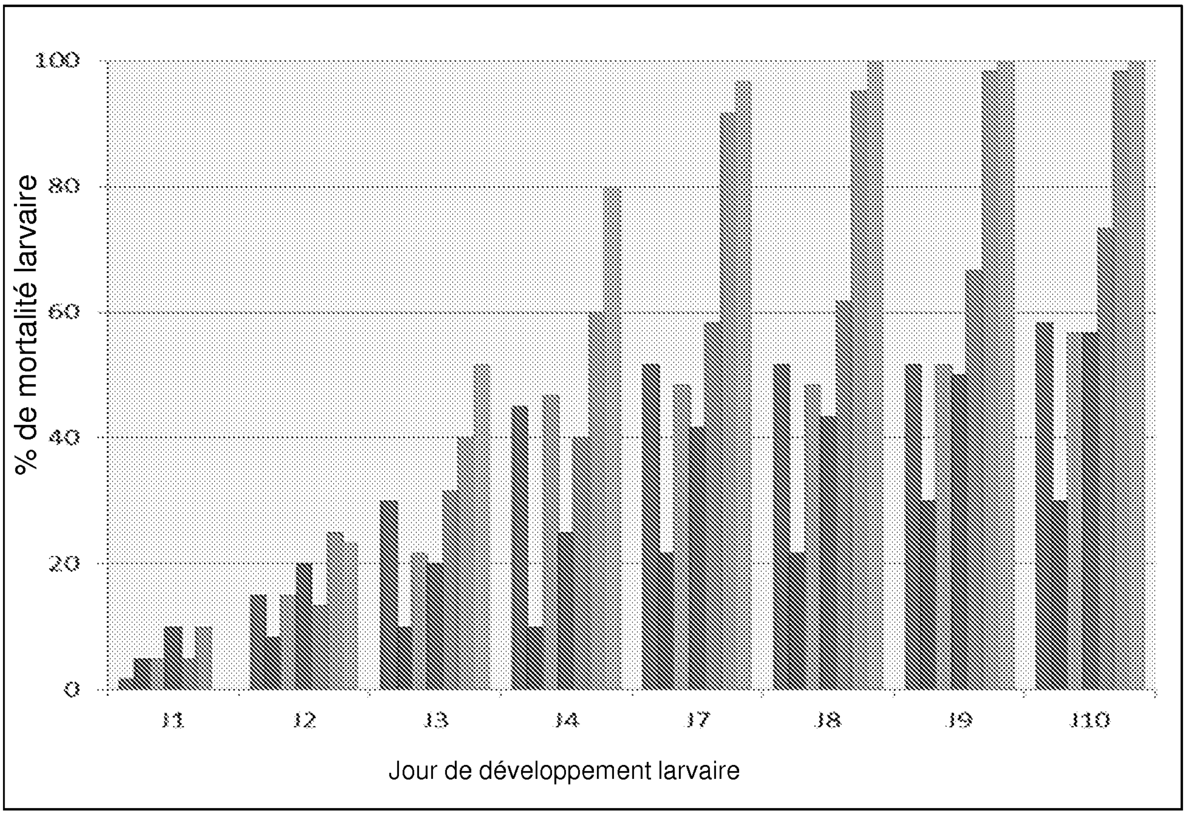
100
80
60
40
20
0
% de mortalité larvaire
J1
J2
J3
J4
J7
J8
J9
J10
Jour de développement larvaire

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2009095624 A
- WO 200063152 A
- WO 2012000960 A
- WO 2008022974 A
- FR 2904935
- WO 03029183 A


### Littérature non-brevet citée dans la description


- Crop Protection Compendium - Global module. CAB International. 1996
- **MASSONIÉ et al.** *zoologie agricole et pathologie végétale,* 1979, vol. 78, 1-5
- **MONET ; MASSONIÉ.** *Agronomie,* 1994, vol. 2, 177-182
- **MONET ; GUYE.** Proc. Fourth Intern. Peach Symposium Acta Hort. 1998, 171-175
- **ROBINSON et al.** *PNAS,* 1996, vol. 93, 6326-31
- **SNOOK et al.** *J. Agric. Food Chem.,* 1994, vol. 42, 1572-74
- **BENINGER et al.** *Journal Of Chemical Ecology,* 2004, vol. 30 (3), 589-606
- **LUKASIK.** *J. Appl. Entomol.,* 2007, vol. 131 (3), 209-214
- **KIMMINS et al.** *Insect Science and its Application,* 1995, vol. 16 (3/4), 363-368
- **SCARPATI et al.** Chicoric Acid (Dicaffeyltartaric acid): Its isolation from Chicory and synthesis. *Tetrahedron,* 1958, vol. 4, 43-48
- Manuel of Development and use of FAO specifications for plant protection Products. FAO, 1999
- Catalogue of pesticides formulations types and international coding system. Technical monograph. CIFAP, 1989
- **RAHBÉ ; FEBVAY.** *Entomologia Experimentalis et Applicata,* 1993, vol. 67, 149-160
- **CHEN.** *Thèse de l'Institut National des Sciences Appliquées,* 1996, 158
- **FEBVAY et al.** Fate of dietary sucrose and neosynthesis of amino acids in the pea aphid, Acyrthosiphon pisum, reared on différent diets. *Journal of Experimental Biology,* 1999, vol. 202 (19), 2639-2652
- **FEBVAY et al.** *Canadian Journal of Zoology,* 1988, vol. 66, 2149-2453